# EUROPEAN PATENT APPLICATION

(11) **EP 2 537 758 A1**
(43) Date of publication of application: **26.12.2012**
(21) Application number: 11744679.9
(22) Date of filing: 16.02.2011
(51) Int. Cl.: B64G 1/64, F16B 2/08

(54) **CONNECTION-SEPARATION DEVICE, CONNECTION-SEPARATION SYSTEM, AND CONNECTION-SEPARATION METHOD**

(30) Priority: 18.02.2010 JP 2010033971
(71) Applicant: Mitsubishi Heavy Industries, Ltd., Tokyo 108-8215 (JP)
(72) Inventor: KAMIYA, Toshihiro, Tokyo 108-8215 (JP); SUZUKI, Keiji, Tokyo 108-8215 (JP)
(74) Representative: Intès, Didier Gérard André
(86) International application number: PCT/JP2011/053296
(87) International publication number: WO 2011/102393

(57) **Abstract**

A connecting and separating device includes: a clamp band which connects an installation member of a launch vehicle and a structure installed on the installation member; and a first connecting section in which end portions of the clamp band are connected and separated. The first connecting section includes: a rotation section which is rotatable around an axis perpendicular to a plane containing the clamp band direction; and a rotating and holding section which sets the rotation section to a rotation inhibited state or a rotation permitted state. When the end portions are connected, the end portions are connected to the rotation section from opposite directions to each other, and the rotating and holding section sets said rotation section to the rotation inhibited state. When the end portions are separated, the rotating and holding section sets the rotation section to the rotation permitted state, and the end portions leave from the rotation section through the rotation of the rotation section.

## Description

### Technical Field

The present invention is related to a connecting and separating device, a connecting and separating system and a connecting and separating method. Especially, the present invention is related to a connecting and separating device which connects a structure to a launch vehicle and which separates the structure from the launch vehicle, a connecting and separating system and a connecting and separating method.

### Background Art

A connecting and separating system is known which connects a structure (e.g. an artificial satellite) to a launch vehicle (e.g. a rocket) and separates the structure from the launch vehicle. In the connecting and separating system for the rocket, the connection between the satellite and the rocket is carried out by fastening a clamp band of metal.

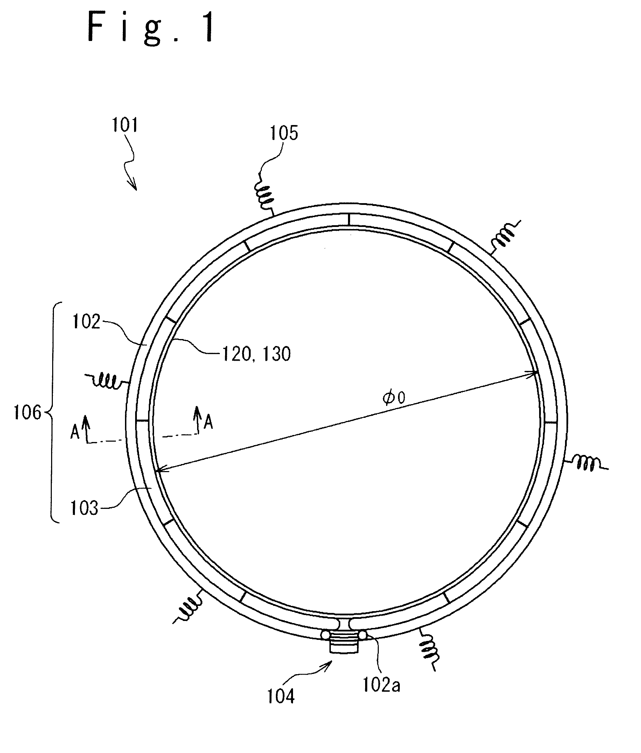

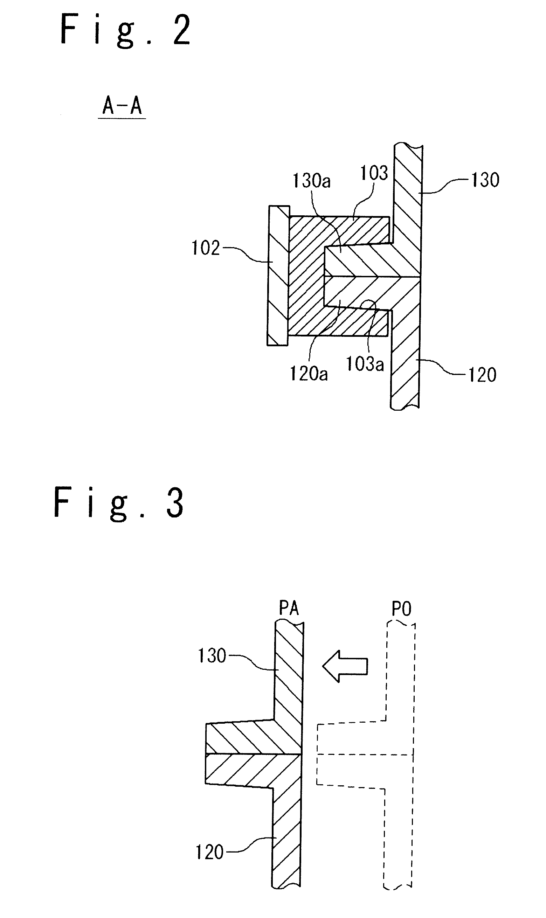

FIG. 1 is a plan view schematically showing the configuration of a conventional connecting and separating system. FIG. 2 is a sectional view schematically showing the configuration along the line A-A section in FIG. 1. The connecting and separating system is provided with a connecting and separating device 101 and a PAF (Payload Attached Fitting) structure 120. The PAF structure 120 is installed in the rocket and is a cylindrical pedestal on which the satellite is installed. The connecting and separating device 101 connects and separates the PAF structure 120 and the satellite side structure 130 installed thereon. Here, the satellite side structure 130 is a member having the cylindrical shape on the side of the satellite. The diameters of the PAF structure 120 and the satellite side structure 130 are almost equal to each other. When both are connected, they are fastened to diameters which are smaller than the original diameters by the connecting and separating device 101. Thus, the stress is generated in the PAF structure 120 and the satellite side structure 130. The connecting and separating device 101 is provided with a clamp band 106 and a connecting section 104.

The clamp band 106 is provided along a circumference formed by a fitting section of the PAF structure 120 and the satellite side structure 130. The clamp band 106 is provided with a plurality of blocks 103 and a strap 102. The plurality of blocks 103 are provided along the circumference of the fitting section of the PAF structure 120 and the satellite side structure 130. The block 103 has a concave section 103a (e.g. its section is a V-shaped ditch, and it is also referred to as a V-ditch) which fits a side edge portion 120a of the PAF structure 120 and a side edge portion 130a of the satellite side structure 130 and which engages with the side edge portions 120a and 130a. The PAF structure 120 and the satellite side structure 130 are fit with each other by engaging the side edge portion 120a and the side edge portion 130a with the concave section 103a. The strap 102 is connected with the surface opposing to the concave section 103a in each of the plurality of blocks 103. The plurality of blocks 103 and the strap 102 are unitary.

By fastening the strap 102, the plurality of blocks 103 are pushed to the fitting section from the surface opposite to the concave section 103a. The connecting section 104 connects the end portions 102a of the strap 102 to maintain the fastening condition of the clamp band 106. The connecting section 104 is exemplified by a bolt-like member (not shown) provided for one of the end portions 102a of the strap 102 and a nut-like member (not shown) provided for the other end portion 102a. The connecting section 104 connects the end portions 102a of the strap 102 by screwing the bolt-like member into the nut-like member. The force in an outward direction is applied to the clamp band 106 by a plurality of springs 105 attached on the body of the rocket.

In the connecting and separating device 101, the separation of the satellite and the rocket is carried out by using a pyrotechnic. The pyrotechnic moves a cutting jig at high speed in case of the operation to cut the bolt-like member in the connecting section 104. By the cutting of the bolt-like member, the end portions 102a of the strap 102 are separated. The clamp band 106 is pulled in an outward direction at high speed by the tension of the clamp band 106 and the force of the springs 105. As a result, because the plurality of blocks 103 move outward at high speed, the connection between the satellite and the rocket is relieved.

As the related technique, an apparatus and method for connecting two portions of a spacecraft are disclosed in US Patent 6,454,214A. A clamp functions to separably connect a first portion and a second portion of the spacecraft, and to accumulate the energy of compressive stress when the first portion and the second portion of the spacecraft are separated. The clamp is provided with a first end and a second end. At least an energy accumulation system operates to convert at least a part of the compressive stress of the clamp into rotation energy when the clamp is opened to separate the first portion and the second portion of the spacecraft. The energy accumulation system is provided with a first connecting section which contains a screw section, a second connecting section which contains a screw section, a connecting unit which complementary engages with the screw sections of the first connecting section and the second connecting section. The connecting unit can operate to connect a first end and a second end of the clamp. The first and second connecting sections can be rotated so as to be separated from the connecting unit in case of the separation.

### Citation List

[Patent Literature 1]: US Patent No. US 6,454,214

### Summary of the Invention

In the connecting and separating device 101 shown in FIG. 1 and FIG. 2, in case of the cancelation of connection (the separation) of the satellite and the rocket, the bolt-like member of the connecting section 104 is cut and the clamp band 106 is pulled outside at high speed by the tension due to the clam band 106 and the force of the springs 105. As a result, the force (stress) is released which is suppressed with the fastening force of the clamp band 106 through the blocks 103 in a direction from the center of the PAF structure 120 to the outside and the satellite side structure 130. FIG. 3 is a diagram schematically showing a state that the stress of the PAF structure 120 and the satellite side structure 130 is released. This figure shows the same section as in FIG. 2. The satellite side structure 130 is in the position P0 in the accumulation condition of the stress in case of connecting. However, the PAF structure 120 and the satellite side structure 130 can move freely after the bolt-like member of the connecting section 104 is cut so that the blocks 103 are released. Therefore, the stress is released at very high speed and the PAF structure 120 and the satellite side structure 130 try to move to the position PA which is the position where there is no stress. As a result, the PAF structure 120 and the satellite side structure 130 vibrate intensely around the position PA as a center. That is, a shock is imposed to the satellite side structure 130 by relieving the fastening force at a moment, in addition to the shock by the pyrotechnic. When such separation shock is high, it becomes necessary to make the design condition of equipment on the side of the satellite severe, which results in a problem in the aspect of the cost, the weight and so on.

An object of the present invention is to provide a connecting and separating device, a connecting and separating system and a connecting and separating method, in which the separation shock can be reduced when a launch vehicle (e.g. a rocket) and a structure (e.g. a satellite) are separated.

Also, another object of the present invention is to provide a connecting and separating device, a connecting and separating system and a connecting and separating method, in which a shock can be reduced when the strain energy of the satellite side structure is released at a moment in case of the separation.

These objects of this invention, as well as further objects and profits can be easily confirmed from the following description and the attached drawings.

A connecting and separating device includes a clamp band which connects an installation member of a launch vehicle and a structure installed on the installation member; and a first connecting section in which end portions of the clamp band are connected and separated. The first connecting section includes a rotation section which is rotatable around an axis perpendicular to a plane of the clamp band; and a rotating and holding section which sets the rotation section to a rotation inhibited state or a rotation permitted state. When the end portions are connected, the end portions are connected to the rotation section from opposite directions to each other, and the rotating and holding section sets the rotation section to the rotation inhibited state. The rotating and holding section sets the rotation section to the rotation permitted state, when the end portions are separated, and the end portions leave from the rotation section through the rotation of the rotation section.

In the above-mentioned connecting and separating device, it is desirable that the rotation section includes a latch section with which the end portions engage; and a rotor which rotates around the axis with the latch section. It is desirable that the rotation of the rotation section is controlled based on inertia moment of the rotor.

It is desirable that positions where the latch section engages with the end portions are symmetrical positions with respect to the axis, in the above-mentioned connecting and separating device.

It is desirable that a distance between each of the positions in which the latch section engages with the end portions and the axis is smaller than a radius of the rotor, in the above-mentioned connecting and separating device.

It is desirable that the above-mentioned connecting and separating device further includes a second connecting section which carries out connecting and separation in a portion of the clamp band.

It is desirable that the second connecting section has the same structure as the first connecting section of the clamp band, in the above-mentioned connecting and separating device.

It is desirable that the rotation section has a bearing for the axis in at least one of an upper side and a lower side of the rotation section, in the above-mentioned connecting and separating device.

In the above-mentioned connecting and separating device, it is desirable that the rotor has an opening. The rotating and holding section includes a pin; and a driving section which inserts the pin into the opening and pulls out the pin from the opening. It is desirable that the rotor is set to the rotation inhibited state by inserting the pin into the opening, and the rotor is set to the rotation permitted state by pulling out the pin from the opening.

A connecting and separating system of the present invention includes an installation member which is installed in a launch vehicle and in which a structure is installed; and the connecting and separating device described above which connects the structure with the installation member or separates the structure from the installation member. The first connecting section is installed on the installation member.

A connecting and separating method of the
present invention which uses a connecting and separating system which connects a structure with an installation member or separates the structure from the installation member. The connecting and separating system includes the installation member which is installed in a launch vehicle and on which the structure is installed; and a connecting and separating device which connects the structure with the installation member or separates the structure from the installation member. The connecting and separating device includes a clamp band which engages the installation member and the structure; and a first connecting section which connects end portions of the clamp band and separates the end portions. The first connecting section includes a rotation section which is rotatable around an axis perpendicular to a plane containing a circumference of the clamp band; and a rotating and holding section which sets the rotation section to a rotation inhibited state or to a rotation permitted state. The first connecting section is attached to the installation member. The rotating and holding section sets the rotation section to the rotation inhibited state when the end portions are connected, and the end portions are engaged with the rotation section from opposite directions to each other. The connecting and separating method includes setting the rotation section to the rotation permitted state by the rotating and holding section, when the end portions of the clamp band are separated; rotating the rotation section by pulling the end portions into opposite directions to each other by tension of the clamp band; and separating the end portions from the rotation section.

According to the present invention, the separation shock can be reduced when the launch vehicle and the structure are separated. Also, according to the present invention, the shock when the strain energy of the satellite side structure is momentarily released can be reduced in case of the separation.

### Brief Description of the Drawings

FIG. 1 is a plan view schematically showing the configuration of a conventional connecting and separating system;
FIG. 2 is a sectional view schematically showing the configuration of the conventional connecting and separating system;
FIG. 3 is a diagram schematically showing a state when stresses in a PAF structure and a satellite side structure are loosed;
FIG. 4 is a plan view schematically showing the configuration of the connecting and separating system according to an embodiment of the present invention;
FIG. 5 is a sectional view schematically showing the configuration along the line A-A shown in FIG. 4;
FIG. 6 is a plan view schematically showing the configuration of a first connecting section and its neighborhood of the connecting and separating system of FIG. 4;
FIG. 7 is a front view schematically showing the configuration of the first connecting section and its neighborhood of the connecting and separating system of FIG. 4;
FIG. 8 is a right side view showing the configuration of the first connecting section and its neighborhood of the connecting and separating system of FIG. 4;
FIG. 9 is an exploded view schematically showing the configuration of the first connecting section of the connecting and separating system of FIG. 4;
FIG. 10 is a perspective view schematically showing the configuration of the first connecting section and its neighborhood of the connecting and separating system of FIG. 4;
FIG. 11 is a flow chart showing an operation of the connecting and separating system according to an embodiment of the present invention;
FIG. 12 is a plan view schematically showing the operation of the first connecting section and its neighborhood according to the embodiment of the present invention;
FIG. 13A is a sectional view schematically showing along the line A-A shown in FIG. 4 about each step of FIG. 11;
FIG. 13B is a sectional view schematically showing along the line A-A shown in FIG. 4 about each step of FIG. 11;
FIG. 14 is a right side view schematically showing a modification example of the first connecting section of the connecting and separating system of FIG. 4 and the configuration of its neighborhood; and
FIG. 15 is an exploded view showing the configuration of the first connecting section of the connecting and separating system of FIG. 14.

### Description of Embodiments

Hereinafter, a connecting and separating device, a connecting and separating system, and a connecting and separating method according to embodiments of the present invention will be described with reference to the attached drawings. Here, a case where a rocket is used as a launch vehicle in which the connecting and separating system is installed and a satellite is used as a structure connected to and separated from the launch vehicle will be described as an example.

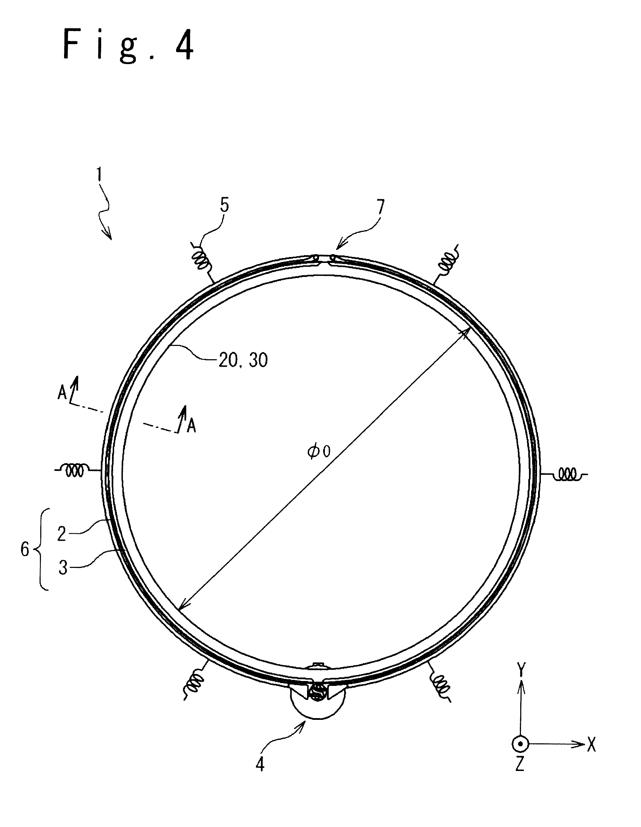

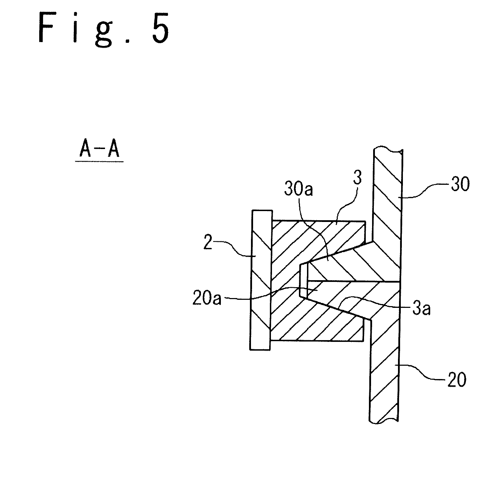

The configuration of the connecting and separating device and the connecting and separating system according to an embodiment of the present invention will be described. FIG. 4 is a plan view schematically showing a configuration of the connecting and separating system according to an embodiment of the present invention. FIG. 5 is a sectional view schematically showing a section of the connecting and separating system along the line A-A in the system of FIG. 4. The connecting and separating system is provided with the connecting and separating device 1 and a PAF (Payload Attached Fitting) structure 20.

The PAF structure 20 (an installation member) is a cylindrical pedestal which is installed in the rocket and on which the satellite is installed. The connecting and separating device 1 connects and separates the PAF structure 20 and a satellite side structure 30 installed on the structure 20. However, the satellite side structure 30 is a satellite side member having a cylindrical shape. The diameter of the PAF structure 20 and that of the satellite side structure 30 are almost equal to each other. Thus, when both are connected, the PAF structure 20 and the satellite side structure 30 are fastened by the connecting and separating device 1 and are tightened to a diameter which is smaller than an original diameter. In this way, stress is generated due to strain in the PAF structure 20 and the satellite side structure 30. The connecting and separating device 1 is provided with a clamp band 6, a first connecting section 4 and a rotating and holding section 8. It should be noted that a second connecting section 7 may be provided as shown in FIG. 4.

The clamp band 6 is provided along a circumferential shape formed by the fitting section of the PAF structure 20 and that of the satellite side structure 30. By fastening the clamp band 6, the satellite side structure 30 and the PAF structure 20 transform toward the inside. That is, the satellite side structure 30 and the PAF structure 20 involve the stress due to the strain (strain energy) which accompanies the transformation at the time of the engagement. The clamp band 6 is provided with a plurality of blocks 3 and a strap 2.

The plurality of blocks 3 are provided and arranged along the circumferential shape formed by the fitting section of the PAF structure 20 and the satellite side structure 30. The block 3 has a concave section 3a in which a side edge portion 20a of the PAF structure 20 and a side edge portion 30a of the satellite side structure 30 are engaged together. The concave section 3a has an almost V-shaped ditch. The side edge portion 20a of the PAF structure 20 and the side edge portion 30a of the satellite side structure 30 are fit to form a mountain-like convex portion and the convex portion engages with the concave section 3a. For example, the block 3 is formed of aluminum.

The strap 2 has an annular shape in which the end portions of the strap are connected by the connecting section 4 to be described later. In each of the plurality of blocks 3, the strap 2 is connected to a surface of the block 3 on the side opposite to the concave section 3a. The plurality of blocks 3 and the strap 2 are made unitary. By fastening the strap 2, the plurality of blocks 3 are pushed from the surface on the side opposite to the concave section 3a to be engaged with the fitting section.

By the fastening force which directs to the center of the PAF structure 20 and the satellite side structure 30, the plurality of blocks 3 are directed to the center direction. The force of the PAF structure 20 and the satellite side structure 30 which directs to the outside from the center is suppressed with the fastening force in the concave section 3a. Through the balance of the suppressing force and the stress due to the strain stress of the PAF structure 20 and the satellite side structure 30, the engagement between the PAF structure 20 and the satellite side structure 30 and the clamp band 6 can be maintained. Force directing outwardly is applied to the clamp band 6 by a plurality of springs 5 attached to the body of the rocket (not illustrated). For example, the strap 2 is formed of steel.

The first connecting section 4 connects the end portions of the strap 2 and sustains the fastening force due to the clamp band 6. Or, the first connecting section 4 looses the fastening by the clamp band 6 to separate the end portions from the connecting state. Details of the first connecting section 4 will be described later. The rotating and holding section 8 is attached to the PAF structure 20 so as to fix a rotation mass of the first connecting section 4 to a rotation inhibited state, or to release the rotation mass from the rotation inhibited state to set to the rotation permitted state in which the mass can be rotated. Thus, the connection of the first connecting section 4 is sustained or loosed.

In case of existence of the second connecting section 7, the second connecting section 7 is provided in a position on the way of the clamp band 6 (e.g. a position opposing to the first connecting section 4). For example, as the second connecting section 7, the same configuration as the connecting section 104 described with reference to FIG. 1 may be used. That is, the second connecting section 7 connects the end portions of the strap 2 by screwing a bolt-like member into a nut-like member. Here, the second connecting section 7 is provided to facilitate the attachment of the clamp band 6. Therefore, the second connecting section 7 is not cut and therefore, a pyrotechnic is not used. However, the second connecting section 7 may be set to be separatable for backup when the satellite can not be separated by the first connecting section 4 and it may be separated as in a conventional case. On the separation, it is important to reduce a vibration because of the rapid release of the stress due to the strain stress, and when the vibration by the pyrotechnic is not important, the separation may be performed by cutting the bolt-like member with the pyrotechnic.

Also, it is considered that the configuration of the second connecting section 7 is set to be the same as that of the first connecting section 4. In this case, as a spare of the first connecting section 4, it is possible to give redundancy to the first connecting section 4. Or, the second connecting section 7 may perform the connecting and separation in the same manner as the first connecting section 4. In this case, the separation is performed at the same time as the first connecting section 4. Moreover, a plurality of configurations such as the first connecting section 4 and the second connecting section 7 may be provided.

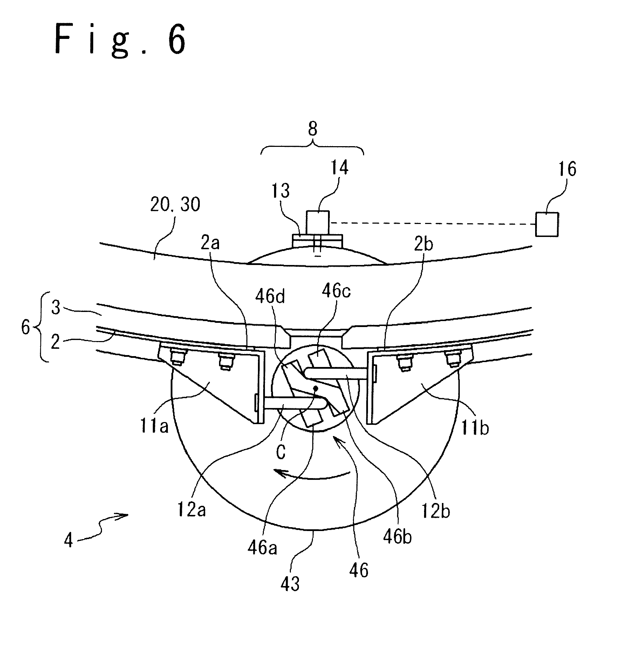

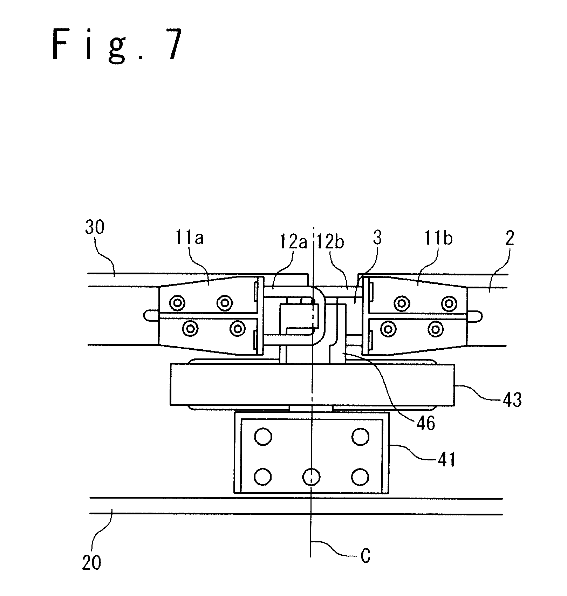

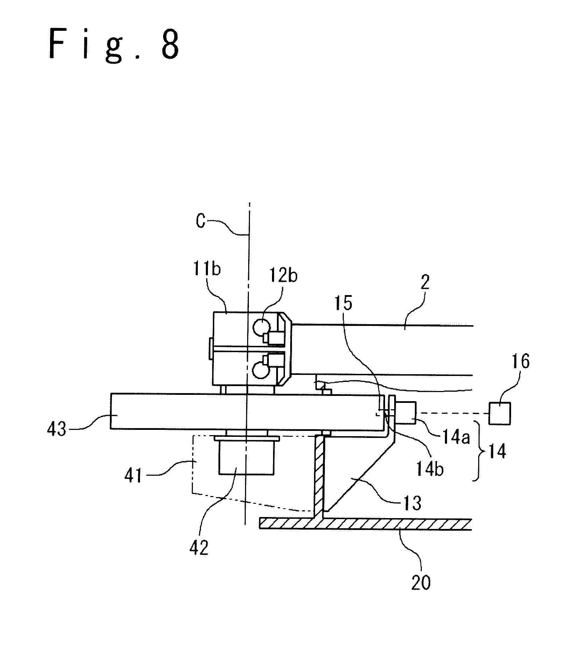

Next, details of the first connecting section 4 will be described. FIG. 6 to FIG. 8 are diagrams schematically showing the configuration of the first connecting section of the connecting and separating system of FIG. 4 and the neighborhood thereof. FIG. 6 is a plan view, and FIG. 7 is a front view and FIG. 8 is a right side view.

An attaching section 11a and a hanging section 12a are provided for one of the end portions 2a of the strap 2. The attaching section 11a fixedly attaches the hanging section 12a to the end portion 2a. The hanging section 12a has a shape of a rectangular frame of which one side is missing. The hanging section 12a is fixed on the attaching section 11a in a portion where the side is missing. It is possible to hang the frame to a protrusion section 46a of a latch section 46 in the first connecting section 4 to be described later. In the same way, an attaching section 11b and a hanging section 12b are provided for the other end portion 2b of the strap 2. The attaching section 11b fixedly attaches the hanging section 12b to the end portion 2b. The hanging section 12b has a shape of a rectangular frame of which one side is missing. The hanging section 12b is fixed on the attaching section 11b in a portion where the side is missing. It is possible to hang a portion equivalent to the inside of the frame, to a protrusion section 46b of the latch section 46 in the first connecting section 4 to be described later. The attaching sections 11a and 11b, and the hanging sections 12a and 12b can be thought that they are the hanging sections because they are members used to hang to the latch section 46.

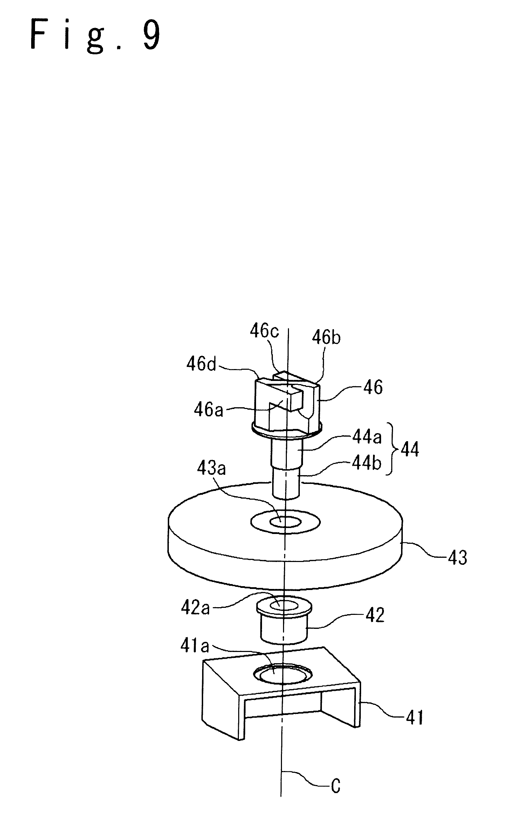

First, the first connecting section 4 will be described with reference to FIG. 9. FIG. 9 is an exploded view schematically showing the configuration of the first connecting section of the connecting and separating system of FIG. 2. The first connecting section 4 is provided with an attachment bracket 41, a bearing 42, the rotation mass 43 and the latch section 46. Among them, the rotation mass 43 and the latch section 46 are attached to the attachment bracket 41 rotatably around a rotation axis C by using the bearing 42.

The latch section 46 has the protrusion section 46a and an auxiliary section 46b, and the protrusion section 46c and an auxiliary section 46d in an upper section. The protrusion section 46a and the auxiliary section 46d are provided in a relation of back to back and the auxiliary section 46d and the protrusion section 46c are provided in a relation of back to back. The protrusion section 46a and the protrusion section 46c are provided in symmetrical positions with respect to the rotation axis C. In the same way, the auxiliary section 46b and the auxiliary section 46d are provided in symmetrical positions with respect to the rotation axis C. One side of the hanging section 12a of the strap 2 is inserted into a U-shaped ditch which is formed from the protrusion section 46a and the auxiliary section 46b, and is hung to the protrusion section 46a. In the same way, one side of the hanging section 12b of the strap 2 is inserted into a U-shaped ditch which is formed from the protrusion section 46c and the auxiliary section 46d, and is hung to the protrusion section 46c. These U-shaped ditches are in the state that each ditch is open. Therefore, if force in a direction (a component) from the inside of the ditch to the opening is given to the hanging sections 12a and 12b, they can be drawn out from the U-shaped ditches.

The latch section 46 has an axle section 44a in a lower portion, and has an axle section 44b in a lower portion from the axle section 44a. The axle section 44a is fit with an opening 43a of the rotation mass 43 and fixedly connects the latch section 46 and the rotation mass 43, to transfer the rotation of the latch section 46 around the rotation axis C to the rotation mass 43. The axle section 44b is inserted into the bearing 42 and holds the latch section 46 and the rotation mass 43 rotatably. The latch section 46 rotates by pulling the protrusion section 46a in a predetermined direction by the hanging section 12a and pulling the protrusion section 46b into a direction opposite to the predetermined direction by the hanging section 12b, with the tension of the clamp band 6.

The rotation mass 43 is a member having an almost disk-like shape. The axle section 44a of the latch section 46 is inserted into the opening 43a to be fixedly connected with the latch section 46. The rotation mass 43 rotates together with the latch section 46. The rotation mass 43 gives an inertia moment (I = MR²/2 in case of mass M and radius R) to the latch section 46 when the latch section 46 rotates. Thus, the rotation mass 43 controls the rotation operation (the rotation condition) of the latch section 46. For example, as the inertia moment becomes larger, the time until the latch section 46 begins to rotate from the stationary condition becomes longer so that a rotation speed and an increase of the rotation speed (acceleration) at a rotation initial stage can be made lower. For example, in order to control the rotation operation to a desired condition, it is possible to change the mass M, the density ρ and the radius R. Also, if the desired inertia moment can be given, the rotation mass may have another shape like a ring shape. Metal such as stainless steel is exemplified as material of the rotation mass 43. When a size should be made small, a high density material such as W (tungsten) and Pb (lead) can be used.

The attachment bracket 41 is a base section of the first connecting section 4 and is fixed to the side surface of the PAF structure 30. The attachment bracket 41 has an opening 41a which holds the bearing 42 on the upper surface. The bearing 42 is provided for the opening 41a. The axle section 44b is inserted into the bearing section 42a so that the bearing 42 holds the rotation mass 43 and the latch section 46 unitarily and rotatably.

The latch section 46 and the rotation mass 43 rotate around the rotation axis C which passes the center of the axle sections 44a and 44b, the rotation mass 43 and the bearing 42. The rotation axis C (Z axis direction) is a perpendicular direction to a plane (XY plane) which involves a loop of the clamp band 6. That is, it is a perpendicular direction (Z axis direction) to the plane (XY plane) which contains the loop of the clamp band 6 when the clamp band 6 is connected. Because the rotation axis C directs to such a direction, a direction in which the end portions 2a and 2b of the clamp band 6 pull the latch section 46 and a rotation direction of the rotation mass 43 can be projected on a same plane in the top view. In this way, the rotation of the latch section 46 can be easily converted into the rotation of the rotation mass 43 through the axle section 44a.

Next, with reference to FIG. 6 to FIG. 8, the rotation of the latch section 46 and the rotation mass 43 is controlled by the above-mentioned rotating and holding section 8. The rotating and holding section 8 is provided with an attachment member 13 and a rotation mass holding section 14. The attachment member 13 attaches the rotation mass holding section 14 on the inner side surface of the PAF structure 20. The rotation mass holding section 14 fixes the rotation mass 43 such that the mass 43 does not rotate, and releases the mass 43 from the fixation such that mass 43 can rotate. The rotation mass holding section 14 is exemplified by a pin plug and contains a driving section 14a and a pin 14b. The driving section 14a fixes the rotation mass 43 to a rotation inhibited state by inserting the pin 14b in an opening 15 provided for the rotation mass 43. Also, the driving section 14a sets the rotation mass 43 to a rotation permitted state by pulling out the pin 14b from the opening 15 of the rotation mass 43.

When the rotation mass 43 is in the rotation permitted state, the end portions 2a and 2b try to move into directions in which they move apart from each other, due to the stress of the clamp band 6. In addition, the latch section 46 and the rotation mass 43 rotate, and the end portions 2a and 2b of the clamp band 6 move apart from the latch section 46 so that the fastening of the clamp band 6 loosens. The stress due to the strain of the PAF structure 20 and the satellite side structure 30 suppressed by the clamp band 6 is loosened because the clamp band 6 is loosened. After that, the rotation is accelerated, and the end portions 2a and 2b of the clamp band 6 are separated finally, so that the clamp band 6 is pulled by the springs 5 to leave the fitting section. The stress of the satellite side structure 30 is fully loosed when the end portions 2a and 2b of the clamp band 6 are separated so that the clamp band 6 is separated.

At this time, because the clamp band 6 loosens with the rotation of the rotation mass 43, it takes a time for the release of the stress for a time necessary for the rotation. The vibration and shock due to the loose of the stress can be substantially restrained because the PAF structure 20 and the satellite side structure 30 do not loose the stress at a moment but the stress is loosed gradually for a long time. Thus, the shock of the satellite separation can be reduced. It should be noted that if the rotating and holding section 8 holds the rotation mass 43 to a rotation inhibited state, and releases the rotation mass 43 to the rotation permitted state, the rotating and holding section 8 is not limited to the above embodiment. For example, a method of pinching the rotation mass 43 from upper and lower directions to fix and stop it would be envisaged.

The control unit 16 controls the operation of the rotating and holding section 8. For example, when the control unit 16 is a timer, the control unit 16 inserts the pin 14b of the rotation mass holding section 14 into the opening 15 of the rotation mass 43 so that the rotation mass 43 in the first connecting section 4 does not rotate until a preset time is reached. If the time reaches the preset time, the pin 14b of the rotation mass holding section 14 is pulled out from the opening 15 such that the rotation mass 43 in the first connecting section 4 becomes rotatable. Or, the control unit 16 may control the inserting and pulling-out operations of the pin 14b of the rotation mass holding section 14 based on a program control, when the control unit 16 is a microcomputer. Moreover, in the control, the control unit 16 may execute the above program control in response to a control signal from an external control device. Moreover, a control unit provided in the rocket may be used as this control unit 16.

As for the size and mass of the rotation mass 43 in the first connecting section 4, for example, they are determined as follows. First, a time until the latch section 46 starts a rotation from the stationary condition and an increase in the rate of rotation speed (acceleration) at the initial stage of the rotation start are determined. After that, the inertia moment (I=MR²/2) at the initial time of the rotation start is determined. As an example of the rotation mass 43 determined in this way, for example, the following points are thought of. In FIG. 4, when the load in the fastening of the clamp band 6 is 30 kN, and the diameter ϕ0 of the PAF structure 20 is 1000 mm, for example, the diameter of the rotation mass 43 is about 20 cm, the mass of the rotation mass 43 is about 5 kg and the mass of the PAF structure 20 is about 100 kg. This is an example when a time until the end portions of the clamp band 6 leave after the rotation mass is released from the rotating and holding section 8 to be possible to rotate, is 10 msec (or order of 10 msec). In this case, it is possible to delay late about 10 times, compared with few msec (order of 1 msec) in case of using a conventional pyrotechnic (FIG. 1).

Also, the distances between the rotation axis C and the hanging sections 12a and 12b (hereinafter, to be referred to as an offset) when the hanging sections 12a and 12b are hung to the protrusion sections 46a and 46c of the latch section 46 are set to be smaller than the radius of the rotation mass 43. This is because the resistance at the time of the rotation start can be made relatively large when the size of the offset is made small. In this way, even if the size of the rotation mass 43 is made small, the time required for the rotation can be set to a desired value. Thus, it is possible to make the rotation mass 43 small in size and low in mass.

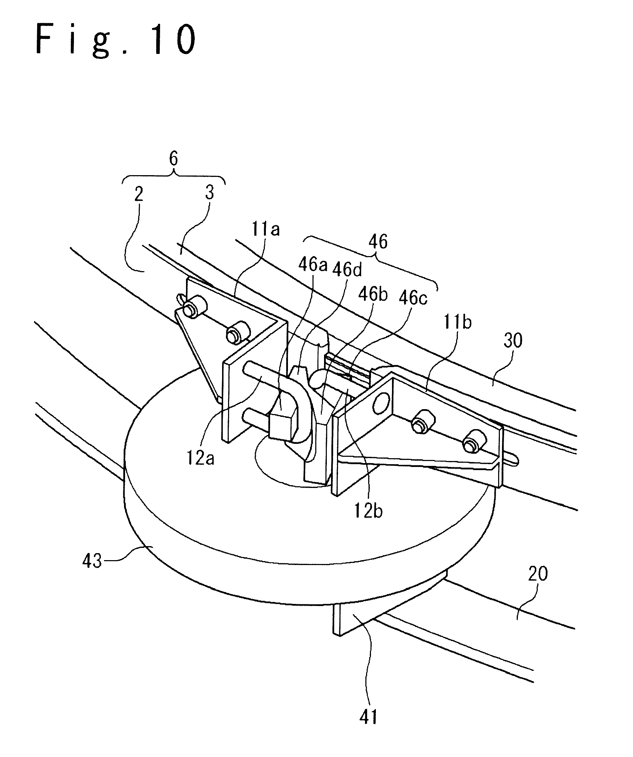

FIG. 10 is a perspective view schematically showing the configuration of the first connecting section and the neighborhood of the connecting and separating system of FIG. 4. FIG. 10 shows a connection condition so as to be easy to understand. In the first connecting section 4, the hanging section 12a is hung to the protrusion section 46a of the latch section 46, to engage with the U-shaped ditch formed between the protrusion section 46a and the auxiliary section 46b. In the same way, the hanging section 12b is hung to the protrusion section 46c of the latch section 46 to engage with the U-shaped ditch formed between the protrusion section 46c and the auxiliary section 46d. This condition is sustained by inserting the pin 14b of the rotation mass holding section 14 in the opening 15 of the rotation mass 43 by the rotating and holding section 8 (not shown, and refer to FIG. 8).

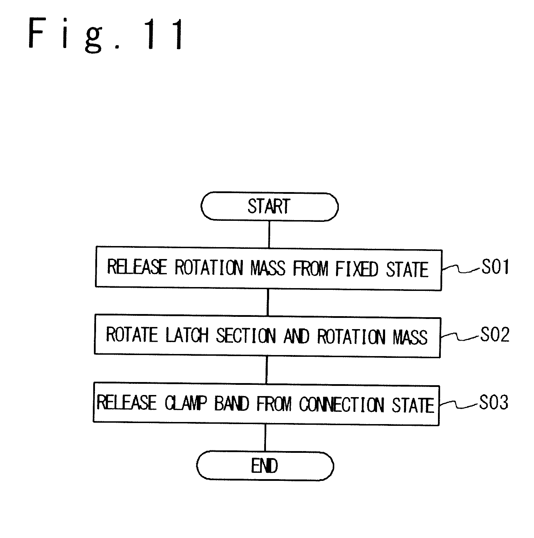

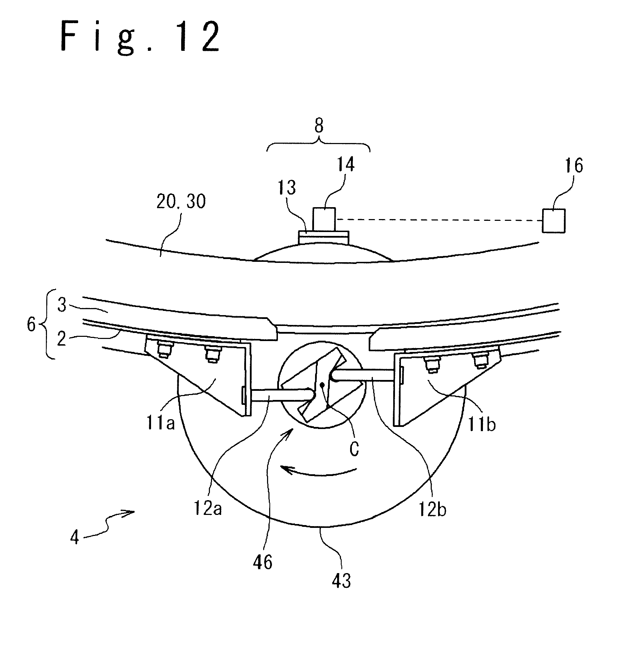

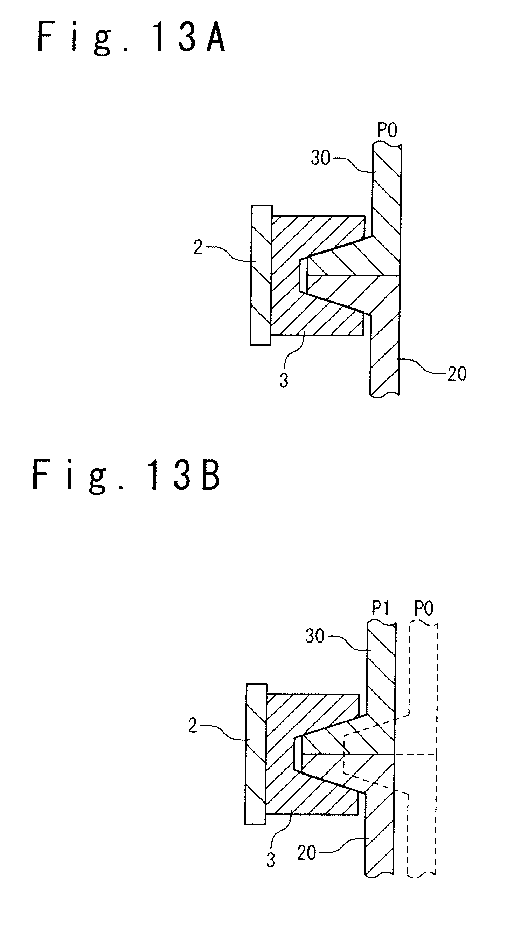

Next, an operation (connecting and separating method) of the connecting and separating device and the connecting and separating system according to the embodiment of the present invention will be described. FIG. 11 is a flow chart showing the operation of the connecting and separating system according to the embodiment of the present invention. FIG. 6 and FIG. 12 are plan views schematically showing the operation of the first connecting section and its neighborhood according to the embodiment of the present invention. FIGS. 13A and 13B are sectional views schematically showing the section along the line A-A in FIG. 4 in steps of FIG. 11.

The satellite side structure 30 is installed by the connecting and separating system in advance. That is, the satellite side structure 30 is connected with the PAF structure 20 by the clamp band 6 (FIGS. 4 to 8, and FIG. 10). In this state, the hanging sections 12a and 12b of the end portions 2a and 2b of the clamp band 6 are hung to the latch section 46. The rotation mass holding section 14 fixes the rotation mass 43 so as to be not able to rotate, by inserting the pin 14b in the opening 15. As a result, the latch section 46 fixed on the rotation mass 43 is also fixed at the position shown in FIG. 5 to FIG. 8 and FIG. 10. FIG. 6 and FIG. 13A show this condition.

As a connecting method, a method is envisaged in which after installing the satellite side structure 30 on the PAF structure 20, the block(s) 3 are fit with the loop of the side edge sections, and then the strap 2 is fastened, and the hanging sections 12a ands 12b of the end portions 2a and 2b are hung on the latch sections 46. Also, when the second connecting section 7 is provided on the way of the clamp band 6 as shown in FIG. 4, after the satellite side structure 30 is installed on the PAF structure 20, the blocks 3 are fit with the loop of the side edge sections to complete the connection of the first connecting section 4 of the strap 2. Then, like the conventional technique, the second connecting section 7 is connected and the clamp band 6 is fastened by using a bolt-like member. At this time, the clamp band 6 is stretched longer than the natural length, and for example, the tension is about 30 kN.

The following separation sequence is used in order to separate the satellite side structure 30 installed on the PAF structure 20 by using the connecting and separating device 1 in this way.

First, the control unit 16 turns on the rotation mass holding section 14 of the rotating and holding section 8 at a step reaching the time of separation of the satellite side structure 30. The rotation mass holding section 14 pulls out the pin 14a from the opening 15 of the rotation mass 43 (Step S01). Thus, the rotation mass 43 becomes rotatable. As a result, the latch section 46 fixed on the rotation mass 43 becomes rotatable.

When the latch section 46 is in the rotatable
condition, the end portions 2a and 2b start to move due to the tension of the clamp band 6 which had been fastened, into a direction in which the end portions 2a and 2b leave from each other. That is, the hanging sections 12a and 12b move in the opposite directions to leave from each other. The protrusion sections 46a and 46c are pulled into the opposite directions to leave from each other, so that the latch section 46 starts to rotate (Step S02). The latch section 46 is unitary with the rotation mass 43, and the rotation mass 43 is larger in the size and mass than the latch section 46. Therefore, the rotation (the speed and acceleration of the rotation) of the latch section 46 is almost determined based on the inertia moment of the rotation mass 43. Therefore, for example, if the inertia moment is made relatively larger, the rotation of the rotation mass 43 can be made relatively gentle. Thus, the timing at which the end portions 2a and 2b of the clamp band 6 leave can be made relatively late. The end portions 2a and 2b of the clamp band 6 leave through the rotation of the latch section 46 as if the length of the clamp band 6 in the circumferential direction becomes substantially long. In this way, because the clamp band 6 is loosed to weaken the fastening force so that the clamp bands 6 can move outside slightly, the PAF structure 20 and the satellite side structure 30 can expand outside from a position P0 to a position P1. Thus, the stress due to strain of the satellite side structure 30 suppressed by the clamp band 6 is released for the loosing. The condition is shown in FIG. 12 and FIG. 13B.

Then, when the rotation of the latch section 46 proceeds, the openings of the U-shaped ditches of the latch section 46 are directed to the movement directions of the end portions 2a and 2b of the clamp band 6. As a result, the end portions 2a and 2b of the clamp band 6 are unconnected from the U-shaped ditches, and the end portions 2a and 2b of the clamp band 6 are separated from each other. Then, the clamp band 6 is pulled by the springs 5 and leaves from the connecting portion of the satellite side structure 30 and the PAF structure 20. The satellite side structure 30 does not receive any constraint because the end portions 2a and 2b of the clamp band 6 are separated and the clamp band 6 leaves. As a result, the stress of the satellite side structure 30 due to the strain is fully released (Step S03). The satellite side structure 30 and the PAF structure 20 are released (separated) from the connection condition.

Through the above operation of the connecting and separating system, the satellite is separated.

In the present embodiment, a mechanism is adopted in which the fastening force given to the fitting section by the clamp band 6 is gradually loosed in a longer time than the conventional case. In this mechanism, when the end portions 2a and 2b of the clamp band 6 are separated, the movement when the end portions 2a and 2b leave from the first connecting section 4 is controlled based on the rotation of the rotation mass 43. The tension of the clamp band 6 is applied to the end portions 2a and 2b. However, the tension is not loosed in a moment but is loosed in a time corresponding to the inertia moment of the rotation mass 43 because the rotation mass 43 is rotated with the tension. Thus, the fastening force of the clamp band 6 can be gradually loosed in a longer time, comparing with the conventional case. As a result, a shock at the time of loosing the fastening force can be substantially reduced.

Also, in the present embodiment, the configuration in which the connecting and separation are carried out through the rotation of the latch section 46 without using the pyrotechnic (a member which does not use gunpowder) can be adopted in the first connecting section 4. Thus, the shock can be reduced, compared with a case of using the pyrotechnic. When not using the pyrotechnic, there are no operation constraints. In addition, because the reuse is possible, it is possible to examine an actual article before actual use.

Moreover, in the present embodiment, the structures of the satellite side structure 30 and the PAF structure 20, i.e. the interface of the satellite and the rocket can be made same as in the conventional technique. Therefore, the compatibility with another rocket can be maintained in viewing from the satellite.

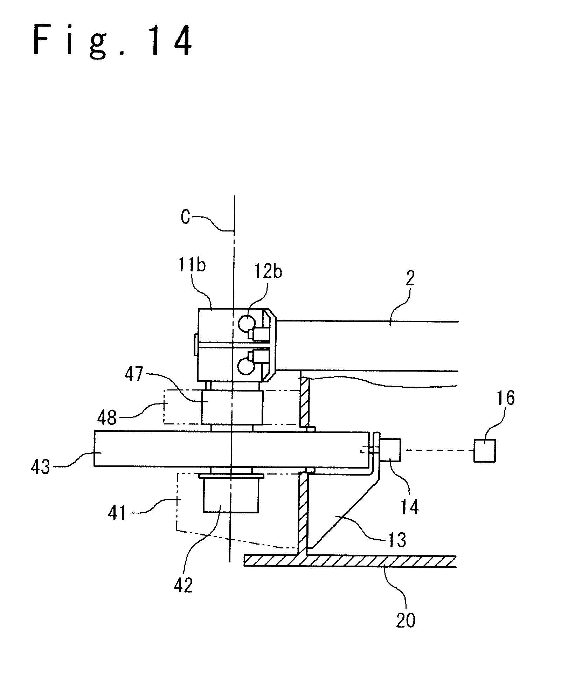

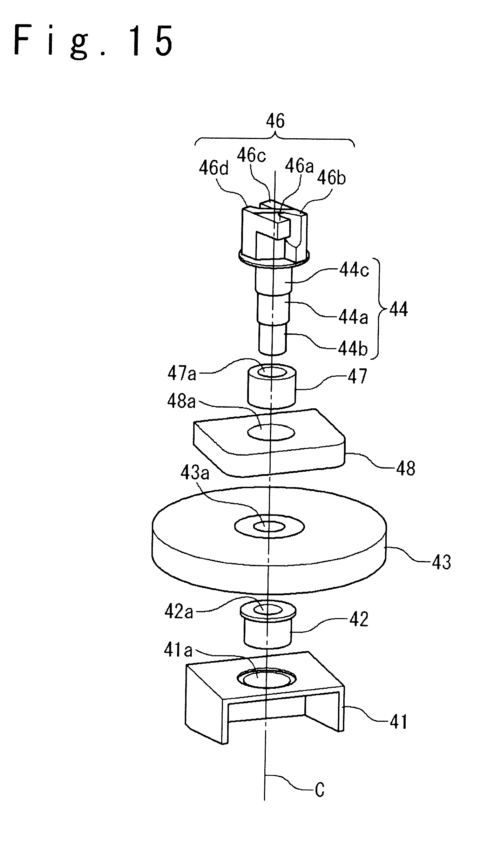

It should be noted that in the above embodiment, the first connecting section 4 is used which has the bearing 42 on one side of the rotation mass 43. However, the present invention is not limited to this example, and may have the first connecting section 4 which has the bearings on both sides of the rotation mass 43. Such an example is shown in FIG. 14 and FIG. 15. The example will be described below.

FIG. 14 is a right side view schematically showing a modification of the first connecting section of the connecting and separating system shown in FIG. 4 and the configuration of its neighborhood. FIG. 15 is an exploded view schematically showing the configuration of the modification of the first connecting section of the connecting and separating system shown in FIG. 14. The first connecting section 4 is provided with the attachment bracket 41, the bearing 42, the rotation mass 43, an upper attachment bracket 48, an upper bearing 47 and the latch section 46.

The latch section 46 has the protrusion section 46a and the auxiliary section 46b, and the protrusion section 46c and the auxiliary section 46d in its upper section. The configuration of them is same as that of FIG. 9. Also, the latch section 46 has axle sections 44a, 44b and 44c in its lower section. The axle section 44c is inserted in the upper bearing 47 to hold the latch section 46 and the rotation mass 43 to be rotatable. The axle section 44a engages with the opening 43a of the rotation mass 43 to fixedly connect the latch section 46 and the rotation mass 43 such that the rotation of the rotation mass 43 is transferred to the latch section 46. The axle section 44b is inserted in the bearing 42 to hold the latch section 46 and the rotation mass 43 to be rotatable.

The upper attachment bracket 48 is provided between the rotation mass 43 and the upper section of the latch section 46 and is fixed on the side surface of the PAF structure 30. The upper attachment bracket 48 has a passing-through opening 48a to hold the upper bearing 47. The bearing 47 is provided for the opening 48a, and the axle section 44c is inserted into a bearing section 47a to hold the rotation mass 43 and the latch section 46 to be unitarily rotatable.

It should be noted that because the configuration of the attachment bracket 41, the bearing 42 and the rotation mass 43 is same as that of FIG. 9, the description is omitted.

The latch section 46 and the rotation mass 43 rotate around the axis (the rotation axis) C which passes the center of the axle section 44, the rotation mass 43 and the bearing 42. The direction of the rotation axis C (the Z-axis direction) is perpendicular to a plane involving the loop of the clamp band 6 (a direction in the XY-plane). That is, the direction of the rotation axis C is perpendicular to a plane (the XY-plane) which contains the circumference of the clamp band 6 when the clamp band 6 has been fastened.

In this case, the same effect as in FIG. 5 to FIG. 8 can be attained.

Moreover, in this case, the bearing 47 is provided in the neighborhood of the latch section 46 to which large force is applied, in addition to the bearing 42. In this way, because the bearing 47 is provided in the neighborhood of the upper section of the latch section 46 to support the axle section on both sides of the rotation mass 43, the latch section 46 and the rotation mass 43 can be rotated more stably, compared with a case of FIGS. 5 to 8 where the axle section is supported with only the bearing 42 apart from left the latch section 46.

In this way, the connecting and separating device of the present invention is provided with the clamp band which engages with the installation member of the launch vehicle and the structure installed on the installation member, and the first connecting section which connects and separates the end portions of the clamp band. The first connecting section is provided with a rotation section which is rotatable around the axis perpendicular to a plane of loop of the clamp band, and a rotating and holding section which sets the rotation section to the rotation inhibited state or the rotation permitted state. When the end portions are connected, the end portions are engaged with the rotation section from the opposite directions to each other and the rotating and holding section sets the rotation section to the rotation inhibited state. When the end portions are separated, the rotating and holding section sets the rotor to be rotation permitted state, the end portions leave from the rotation section through the rotation of the rotor.

In the present invention, when the end portions of the clamp band are separated, the end portions do not separate at a moment, but separate gradually through the rotation operation of the rotor. Therefore, a time for the separation can be extended for a time necessary for the rotor to rotate. Thus, the clamp band can give a temporal margin for the necessary time in loosening. The stress of the structure which has been generated by fastening the clamp band can be gently loosed by using the loosening of the clamp band. As a result, the separation shock can be substantially reduced.

In the above-mentioned connecting and separating device, it is desirable that the rotation section is provided with the latch section which is engaged with the end portions and the rotor which rotates around the axis with the latch section. It is desirable that the rotation operation of the rotation section is controlled based on the inertia moment of the rotor. In this case, the rotation operation can be easily controlled because the section (the latch section) which is engaged with the end portions and the section (the rotor) which controls the rotation operation based on the inertia moment are different in position. Also, in the control of the rotation operation based on the inertia moment, it is possible to control the rotation operation based on a plurality of parameters such as the mass and size of the rotor, and it is easy to give the desired performance.

It is desirable that the positions of the end portions engaged with the latch section are at symmetrical positions with respect to the axis in the above-mentioned connecting and separating device. In this case, it is possible to perform more stably the rotation operation including the rotation of the rotor, thinking that the operation of the end portions became symmetrical.

It is desirable that the distance between the position which the end portion is engaged with and the axis in the above-mentioned connecting and separating device is smaller than the radius of the rotor. In this case, because it is possible to increase the resistance of the rotation start relatively large, even if the size of the rotor is made small, it is possible to set the time necessary for the rotation to a desired value. Thus, it is possible to attempt the size reduction and mass reduction of the rotor.

It is desirable that the connecting and separating device is further provided with a second connecting section for connection and separation of a part of the clamp band. In this case, depending on a kind of the second connecting section, the second connecting section may be used as a jig for the attachment of the first connecting section and as a spare of the first connecting section.

It is desirable that the second connecting section has the same structure as that of the first connecting section of the clamp band in the above-mentioned connecting and separating device. In this case, the second connecting section is used as a spare of the first connecting section of the connecting and separating device so as to increase redundancy.

It is desirable that the rotation section has the bearing on at least one side of the upper side and the lower side in the above-mentioned connecting and separating device. In this case, it is possible to stabilize the rotation of the rotation section.

In the above-mentioned connecting and separating device, it is desirable that the rotor has an opening. The rotating and holding section is provided with a pin and a driving unit which inserts the pin into and pull out it from the opening. It is desirable to set the rotor to the rotation inhibited state by inserting the pin into the opening. It is desirable to set the rotor to the rotation permitted state by pulling out the pin from the opening. In this case, by an easy method in which the pin is inserted or pulled out, the operation of the rotor can be controlled.

The connecting and separating system of the present invention is installed in the launch vehicle, and is provided with the installation member on which a structure is installed and the connecting and separating device described above, in which the structure is connected with or separated from the installation member. The first connecting section is attached to the installation member. In the present invention, the above-mentioned connecting and separating device of the present invention is used. Therefore, it is possible to separate the end portions gradually through the rotation operation of the rotor when the end portions of the clamp band are separated. The separation time is delayed for a time necessary for the rotation of the rotor, and a time margin in loosing of the clamp band can be given for the necessary time. The stress of the structure which has been generated by fastening the clamp band can be gently loosed by using the loosening of the clamp band. As a result, the separation shock can be substantially reduced.

A connecting and separating method of the present invention is a connecting and separating method using the connecting and separating system in which a structure is connected to a launch vehicle and the structure is separated from the launch vehicle. Here, the connecting and separating system is installed in the launch vehicle and is provided with an installation member on which the structure is installed, and the connecting and separating device by which the structure is connected with the installation member or is separated from the attached member. The connecting and separating device is provided with a clamp band which is engaged with the installation member and the structure and the first connecting section in which end portions of the clamp band are connected or separated. The first connecting section is provided with a rotation section which is rotatable around an axis perpendicular to the plane of the clamp band and the rotating and holding section which sets the rotation section to a rotation inhibited state or a rotation permitted state. The first connecting section is attached to the installation member. When the end portions are connected, the rotating and holding section sets the rotation section to the rotation inhibited state and the end portions are engaged with the rotation section from the opposite directions to each other. The connecting and separating method includes a step of setting the rotation section to the rotation permitted state by the rotating and holding section when the end portions of the clamp band are separated, a step of rotating the rotation section by pulling the end portions into the opposite directions to each other due to the tension of the clamp band, and a step of separating the end portions from the rotation section.

The present invention uses the above-mentioned connecting and separating system. Therefore, it is possible to separate the end portions gradually through the rotation operation of the rotor when the end portions of the clamp band are separated. Thus, by delaying a separation start time for a time necessary for the rotation of the rotor, a time margin for the necessary time can be given to loosing of the clamp band. The stress of the structure which has been generated by fastening the clamp band can be gently loosed by using the loosening of the clamp band. As a result, the separation shock can be substantially reduced.

The present invention is not limited to the above embodiments and it would be understood that each of the embodiments may be modified appropriately in a range of the technical scope of the present invention.

This patent application claims a priority based on Japanese Patent Application No. JP 2010-033971 filed on February 18, 2010. The disclosure of the application is incorporated herein by reference.

## Claims

1. A connecting and separating device comprising:
a clamp band which connects an installation member of a launch vehicle and a structure installed on said installation member; and
a first connecting section in which end portions of said clamp band are connected and separated,
wherein said first connecting section comprises:
a rotation section which is rotatable around an axis perpendicular to a plane involving said clamp band; and
a rotating and holding section which sets said rotation section to a rotation inhibited state or a rotation permitted state,
wherein when said end portions are connected, said end portions are connected to said rotation section from opposite directions to each other, and said rotating and holding section sets said rotation section to a rotation inhibited state,
wherein said rotating and holding section sets said rotation section to a rotation permitted state, when said end portions are separated, and said end portions leave from said rotation section through the rotation of said rotation section.

2. The connecting and separating device according to claim 1, wherein said rotation section comprises:
a latch section with which said end portions engage; and
a rotor which rotates around the axis with said latch section, and
wherein the rotation of said rotation section is controlled based on inertia moment of said rotor.

3. The connecting and separating device according to claim 2, wherein positions where said latch section engages with said end portions are symmetrical positions with respect to the axis.

4. The connecting and separating device according to claim 3, wherein a distance between each of the positions which said latch section engages with said end portions and the axis is smaller than a radius of said rotor.

5. The connecting and separating device according to any of claims 1 to 4, further comprising a second connecting section which carries out connecting and separation in a portion of said clamp band.

6. The connecting and separating device according to any of claims 1 to 5, wherein said second
connecting section has the same structure as said first connecting section of said clamp band.

7. The connecting and separating device according to any of claims 1 to 6, wherein said rotation section has a bearing for the axis on at least one side of an upper side and a lower side of said rotation section.

8. The connecting and separating device according to claim 2, wherein said rotor has an opening,
wherein said rotating and holding section comprises:
a pin; and
a driving section which inserts said pin into said opening and pulls out said pin from said opening,
wherein said rotor is set to the rotation inhibited state by inserting said pin into said opening, and said rotor is set to the rotation permitted state by pulling out said pin from said opening.

9. A connecting and separating system comprising:
an installation member which is installed in a launch vehicle and on which a structure is installed; and
said connecting and separating device according to any of claims 1 to 8 which connects said structure with said installation member or separates said structure from said installation member,
wherein said first connecting section is attached to said installation member.

10. A connecting and separating method using a connecting and separating system which connects a structure with an installation member or separates said structure from said installation member,
wherein said connecting and separating system comprises said installation member which is installed in a launch vehicle and on which said structure is installed; and
a connecting and separating device which connects said structure with said installation member or separates said structure from said installation member,
wherein said connecting and separating device comprises:
a clamp band which engages said installation member and said structure; and
a first connecting section which connects end portions of said clamp band and separates said end portions,
wherein said first connecting section comprises:
a rotation section which is rotatable around an axis perpendicular to a plane containing said clamp band; and
a rotating and holding section which sets said rotation section to a rotation inhibited state or to a rotation permitted state,
wherein said first connecting section is attached to said installation member, and
wherein said rotating and holding section sets said rotation section to the rotation inhibited state when said end portions are connected, and said end portions are engaged with said rotation section from opposite directions to each other,
said connecting and separating method comprising:
setting said rotation section to the rotation permitted state by said rotating and holding section, when said end portions of said clamp band are separated;
rotating said rotation section by pulling said end portions into opposite directions to each other by stress of said clamp band; and
separating said end portions from said rotation section.
